# FASCICULE DE BREVET EUROPEEN

(11) **EP 0 875 828 B1**
(45) Date de publication et mention de la délivrance du brevet: **25.05.2016**
(21) Numéro de dépôt: 98401063.7
(22) Date de dépôt: 30.04.1998
(51) Int. Cl.: G06F 9/54, G06F 9/46, H04L 29/08, H04L 29/06

(54) **Procédé et dispositif de transmission d'un notification comportant un service de notifications**
Verfahren und Vorrichtung zur Benachrichtigungsübertragung mit einem Benachrichtigungsdienst
Method and apparatus for notification transmission comprising a notification service

(30) Priorité: 02.05.1997 FR 9705452
(43) Date de publication de la demande: 04.11.1998
(73) Titulaire: ALCATEL LUCENT, 92100 Boulogne-Billancourt (FR)
(72) Inventeur: Couturier, Alban, 75013 Paris (FR); Ruffin, Michel, 92500 Rueil Malmaison (FR); Van der Meulen, Marcel, 75014 Paris (FR)
(74) Mandataire: Berthier, Karine

(56) Documents cités:
- EP-A- 0 759 591

## Description

La présente invention concerne un procédé de transmission d'une notification dans un réseau de traitement d'informations à applications distribuées. Elle concerne en outre un réseau mettant en oeuvre ce procédé.

L'invention s'applique en particulier à l'architecture d'objets distribués de réseaux respectant la spécification "Common Object Request Broker Architecture" (CORBA) de "The Object Management Group" (OMG).

Dans cette architecture, les objets sont distribués sur les différentes unités de traitement d'informations présentes dans le réseau. Ils communiquent par l'intermédiaire d'un bus logiciel désigné par "Object Request Broker" (ORB) dans la spécification CORBA.

Le terme "bus logiciel" désigne l'entité qui permet à des objets d'envoyer et de recevoir des requêtes dans un environnement distribué. Les applications distribuées sont implantées sur des unités de traitement d'informations communiquant entre elles par d'une part le support physique sur lequel sont connectées les unités de traitement d'informations formant le réseau, et d'autre part par les couches inférieures du protocole de communication, c'est-à-dire par exemple les couches IP (Internet Protocol) et TCP (Transmission Control Protocol).

Les unités de traitement d'informations sont par exemple des autocommutateurs d'un réseau de télécommunication ou encore un ensemble de stations de travail reliées à une ou plusieurs imprimantes.

Dans un tel réseau, les objets où qu'ils soient sur le réseau fournissent des services à des objets clients émettant sur le réseau des requêtes pour ces services. Le rôle du bus logiciel (ORB) est de délivrer les requêtes aux objets serveurs concernés et de retourner les valeurs de sortie aux objets clients. Cette opération s'effectue de manière transparente pour l'objet client. Celui-ci ne sait pas où les objets résident sur le réseau, comment ils sont réalisés, comment ils sont mémorisés, ni comment ils sont exécutés. L'objet client n'a besoin pour adresser une requête que de la référence de l'objet.

Conformément à la spécification CORBA, chaque objet distribué comporte une interface de communication rédigée en IDL (Interface Definition Language). Cette interface IDL permet de définir de manière statique les interfaces des objets permettant le portage d'objets entre différents modèles d'objets.

Après compilation de l'interface IDL, le talon ou souche obtenu est lié à la réalisation de l'objet.

Ainsi, l'objet client peut interagir avec un objet serveur éloigné simplement en invoquant les fonctions IDL comme un objet local sans se préoccuper de la situation de l'objet serveur sur le réseau. A cet effet, l'objet client peut utiliser pour adresser sa requête le format de l'interface de communication de l'objet serveur.

Dans de tels réseaux, un grand nombre de données sont transmises directement de manière synchrone d'un objet émetteur vers un objet récepteur, tous deux reliés au même bus logiciel.

Toutefois, de nombreuses données transitent par des serveurs de notifications. Ces serveurs de notifications reçoivent des notifications d'objets émetteurs enregistrés comme tels auprès du service de notifications. Des objets récepteurs, inscrits en tant qu'objets récepteurs et ayant indiqué un ou plusieurs critères de tests prédéterminés afin d'effectuer un filtrage des notifications qui leur sont adressées à partir des données qu'elles contiennent, reçoivent du service de notifications les notifications qui satisfont aux critères de tests prédéterminés.

Les méthodes de filtrage sont particulièrement utiles afin de réduire la quantité de données transmises sur le réseau et afin d'adapter le service de notifications aux besoins de chaque objet récepteur.

Ces filtres peuvent être déclarés de manière dynamique et modifiés.

Les données transmises par les objets émetteurs sous forme de notifications sont structurées suivant des champs ou attributs contenant des valeurs spécifiques à chaque objet émetteur et concernant celui-ci.

Le filtrage consiste à l'identification de certains champs dans la structure de données et à la mise en oeuvre d'une comparaison sur les valeurs de ces champs selon la description du filtre.

Seules les notifications dont les valeurs extraites satisfont aux critères de tests prédéterminés sont transmises à l'objet récepteur.

Dans de tels types de réseau, les méthodes de filtrage mises en oeuvre utilisent des tests de structure simple ne permettant pas un filtrage efficace. En particulier, ces filtres n'assurent pas un filtrage efficient et ne mettent pas en oeuvre des critères de test suffisamment élaborés. Aussi, ils ne sont pas aptes à limiter réellement le trafic vers les objets récepteurs afin que ceux-ci reçoivent uniquement les données leur étant nécessaires.

Dans ces conditions, le réseau véhicule un nombre important de données présentant peu d'intérêt, augmentant inutilement le trafic du réseau.

La demande de brevet Européen publiée sous le numéro EP 0 759 591 A décrit également un procédé de transmission similaire.

L'invention a pour but d'apporter une solution à ce problème et en particulier de proposer un procédé de transmission et un réseau mettant en oeuvre un tel procédé dans lequel un filtrage efficace réduit effectivement le nombre de communications tout en permettant de satisfaire les impératifs de fonctionnement du réseau.

A cet effet, l'invention a pour objet un procédé de transmission d'une notification dans un réseau de traitement d'informations à applications distribuées depuis un émetteur vers au moins un récepteur par l'intermédiaire d'un service de notifications auprès duquel est inscrit le ou chaque récepteur afin d'effectuer un filtrage des notifications selon un critère de test prédéterminé, ledit réseau de traitement d'informations à applications distribuées comprenant des autres émetteurs, l'émetteur étant associé à une unité de traitement d'informations et les autres émetteurs étant associés respectivement à d'autres unités de traitement d'informations, l'émetteur et les autres émetteurs étant adaptés à communiquer entre eux au moins une alarme traduisant une panne d'un niveau déterminé sur l'unité de traitement d'informations ou sur une des autres unités de traitement d'informations, le procédé étant caractérisé en ce que :
- l'émetteur adresse au service de notifications une notification comportant un ensemble d'au moins deux valeurs, l'ensemble de valeurs comprenant une première valeur indiquant un niveau de gravité d'une panne rencontrée sur l'unité de traitement d'informations, l'ensemble de valeurs comprenant également une seconde valeur indiquant un niveau de gravité le plus élevé d'une panne d'un niveau déterminé rencontrée parmi l'unité de traitement d'informations ou les autres unités de traitement d'informations ;
- le service de notifications vérifie, pour chaque récepteur inscrit, si ledit ensemble de valeurs satisfait audit critère de test prédéterminé associé audit récepteur, ledit critère de test prédéterminé comportant une comparaison de la première valeur et de la seconde valeur pour déterminer si la première valeur indique un niveau de gravité d'une panne plus élevé que le niveau de gravité indiqué par la seconde valeur; et
- le service de notifications adresse ladite notification concernant ledit émetteur audit récepteur si le critère de test prédéterminé est satisfait, ledit service de notifications n'adressant pas ladite notification concernant ledit émetteur audit récepteur si le critère de test prédéterminé n'est pas satisfait.

Suivant des modes particuliers de mise en oeuvre, le procédé peut comporter la caractéristique que ledit critère de test prédéterminé est défini par ledit récepteur lors de son inscription auprès du service de notifications.

L'invention a en outre pour objet un réseau de traitement d'informations à applications distribuées comportant au moins un émetteur et d'autres émetteurs, l'émetteur étant associé à une unité de traitement d'informations et les autres émetteurs étant associés respectivement à d'autres unités de traitement d'informations, l'émetteur et les autres émetteurs étant adaptés à communiquer entre eux au moins une alarme traduisant une panne d'un niveau déterminé sur l'unité de traitement d'informations ou sur une des autres unités de traitement d'informations, ledit réseau comportant également au moins un récepteur, et un service de notifications auprès duquel est inscrit le ou chaque récepteur afin de d'effectuer un filtrage des notifications satisfaisant à un critère de test prédéterminé, dans lequel :
- l'émetteur comporte des moyens pour adresser au service de notifications une notification comportant un ensemble d'au moins deux valeurs, l'ensemble de valeurs comprenant une première valeur indiquant un niveau de gravité d'une panne rencontrée sur l'unité de traitement d'informations, l'ensemble de valeurs comprenant également une seconde valeur indiquant un niveau de gravité le plus élevé d'une panne d'un niveau déterminé rencontrée parmi l'unité de traitement d'informations ou les autres unités de traitement d'informations ;
- le service de notifications comporte des moyens pour vérifier, pour chaque récepteur inscrit, si ledit ensemble de valeurs satisfait audit critère de test prédéterminé associé audit récepteur, ledit critère de test prédéterminé comportant une comparaison de la première valeur et de la seconde valeur pour déterminer si la première valeur indique un niveau de gravité d'une panne plus élevé que le niveau de gravité indiqué par la seconde valeur ; et
- le service de notifications comporte des moyens pour adresser ladite notification concernant ledit émetteur audit récepteur si le critère de test prédéterminé est satisfait, ladite notification concernant ledit émetteur n'étant pas adressée audit récepteur si le critère de test prédéterminé n'est pas satisfait.

Suivant des modes particuliers de réalisation, le réseau peut comporter l'une ou plusieurs des caractéristiques suivantes :
- ledit récepteur comporte des moyens de définition dudit critère de test prédéterminé lors de son inscription auprès du service de notifications ;
- l'émetteur ou les autres émetteurs ou l'un au moins des récepteurs sont des objets ;
L'invention a également pour objet une unité d'un réseau de traitement d'informations à applications distribuées, lequel réseau comporte un émetteur et des autres émetteurs et au moins un récepteur, l'émetteur étant associé à une unité de traitement d'informations et les autres émetteurs étant associés respectivement à d'autres unités de traitement d'informations, l'émetteur et les autres émetteurs étant adaptés à communiquer entre eux au moins une alarme traduisant une panne d'un niveau déterminé sur l'unité de traitement d'informations ou sur une des autres unités de traitement d'informations, l'unité de communication comportant un service de notifications auprès duquel est inscrit le ou chaque récepteur afin d'effectuer un filtrage des notifications satisfaisant à un critère de test prédéterminé, l'unité de communication étant caractérisé en ce que l'émetteur comporte des moyens pour adresser au service de notifications une notification comportant un ensemble d'au moins deux valeurs, l'ensemble de valeurs comprenant une première valeur indiquant un niveau de gravité d'une panne rencontrée sur l'unité de traitement d'informations, l'ensemble de valeurs comprenant également une seconde valeur indiquant un niveau de gravité le plus élevé d'une panne d'un niveau déterminé rencontrée parmi l'unité de traitement d'informations ou par les autres unités de traitement d'informations, le service de notifications comportant des moyens pour vérifier, pour chaque récepteur inscrit, si ledit ensemble de valeurs satisfait audit critère de test prédéterminé associé audit récepteur, ledit critère de test prédéterminé comportant une comparaison de la première valeur et de la seconde valeur pour déterminer si la première valeur indique un niveau de gravité d'une panne plus élevé que le niveau de gravité indiqué par la seconde valeur, et le service de notifications comportant des moyens pour adresser ladite notification concernant ledit émetteur audit récepteur si le critère de test prédéterminé est satisfait, ladite notification concernant ledit émetteur n'étant pas adressée audit récepteur si le critère de test prédéterminé n'est pas satisfait.

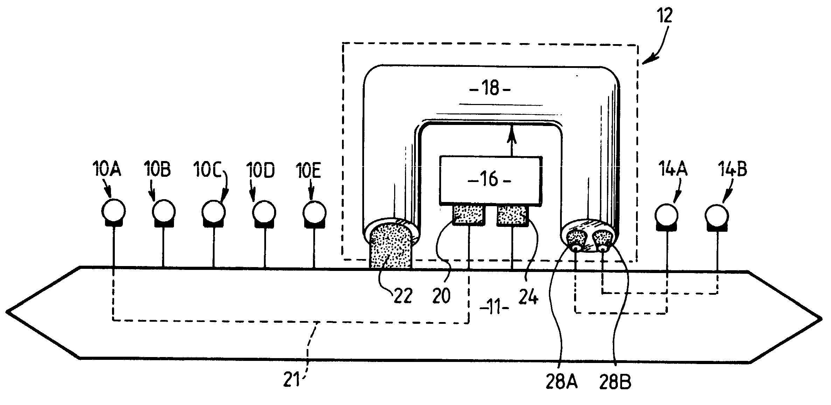

L'invention sera mieux comprise à la lecture de la description qui va suivre, donnée uniquement à titre d'exemple et faite en se référant à l'unique figure qui est une vue schématique d'un réseau d'objets distribués selon l'invention mettant en oeuvre un service de notifications.

Dans la description qui suit, on suppose que chaque objet est conforme à la spécification CORBA et qu'en conséquence, les objets peuvent communiquer entre eux simplement en s'adressant des requêtes indépendamment de leur situation sur le réseau.

Sur l'unique figure sont représentés cinq objets émetteurs désignés par les références 10A, 10B, 10C, 10D et 10E. Chacun de ces objets est affecté à la surveillance du fonctionnement d'une unité de traitement d'informations distincte, par exemple un autocommutateur d'un réseau de télécommunication. Les objets sont adaptés pour évaluer l'état de fonctionnement de tout type de composant du réseau qu'il s'agisse d'une ressource logiciel ou matériel. Ces objets sont répartis sur le réseau et sont reliés par un bus logiciel 11.

Un service de notifications, portant la référence 12, est relié au bus logiciel et assure la communication asynchrone des informations entre les objets du réseau.

Des objets récepteurs, désignés par les références 14A, 14B, sont reliés au bus logiciel 11. Ces objets sont par exemple affectés à des services de suivi du fonctionnement du réseau de télécommunication et sont notamment destinés à la détection de pannes sur le réseau et à l'information d'un opérateur en vue d'une intervention.

Le service de notifications 12 est formé d'un ensemble d'objets reliés sur le bus logiciel 11. En particulier, il comporte un administrateur de serveur de notifications 16 et un canal de notifications 18 destiné à l'envoi de notifications reçues depuis l'un des objets émetteurs vers l'un ou plusieurs des objets récepteurs, lorsque les données de la notification reçue satisfont à un critère de test prédéterminé formulé par l'objet récepteur lors de son inscription au service de notifications.

Chacun des objets émetteurs 10A à 10E est enregistré auprès de l'administrateur de serveur de notifications 16 par l'intermédiaire d'une interface IDL d'enregistrement 20. Cet enregistrement s'effectue par l'envoi d'une requête depuis l'objet émetteur vers l'interface 20. Une telle requête est schématisée pour l'objet 10A par la flèche 21. Chaque objet émetteur 10A à 10E reçoit, lors de son enregistrement, la référence et éventuellement le format de l'interface de communication IDL 22 du canal de notifications 18. Cette référence lui permet alors de transmettre vers le service de notifications 12 des notifications comportant des valeurs le concernant. Ces notifications forment des alarmes et sont représentatives de l'état de fonctionnement de l'unité de traitement d'informations à laquelle est associé l'objet émetteur.

La structure d'une alarme, écrite en IDL, est par exemple de la forme :

```
      struc {
      string name ;
      short severity ;
      short highestseverity ;
      string alarm_reason ;
      } ;
```

où:
"name" est le nom de l'objet émetteur,
"severity" est le niveau, évalué sur une échelle de 1 à 5, de la gravité de la panne rencontrée sur l'unité de traitement d'informations associée à l'objet émetteur correspondant,
"highestseverity" est le niveau de gravité le plus élevé rencontré parmi l'ensemble des objets émetteurs 10A à 10E, et
"alarm_reason" est un identificateur de la panne.

L'objet émetteur affecte une valeur à chacun des champs en fonction de l'état de fonctionnement de l'unité associée.

Afin d'affecter une valeur au champ "highestseverity", les objets 10A à 10E sont adaptés pour communiquer entre eux afin que, lorsque l'un des objets envoie une alarme traduisant une panne d'un niveau déterminé sur l'unité de traitement d'informations associée, l'ensemble des autres objets est destinataire de cette alarme par l'intermédiaire de leur interface IDL.

Par ailleurs, les objets récepteurs 14A, 14B sont inscrits auprès du service de notifications 12 afin de recevoir les notifications les intéressant. A cet effet, chaque objet récepteur 14A, 14B est inscrit auprès d'une interface IDL d'inscription 24 de l'administrateur de serveur de notifications 16. Cette interface est adaptée pour l'inscription des objets reliés au bus logiciel afin que ceux-ci reçoivent les notifications issues du service de notifications pour lesquelles ils sont inscrits.

L'inscription se fait notamment en fournissant à l'administrateur de serveur de notifications 16 la référence de l'objet récepteur inscrit.

Le canal de notifications 18, formant un objet CORBA, est commandé par l'administrateur de serveur de notifications 16. En particulier, l'administrateur de serveur de notifications 16 assure l'inscription des objets récepteurs auprès du canal de notifications 18 en fournissant à celui-ci leur référence.

Lors de son inscription auprès du service de notifications, chaque récepteur définit également un filtre assurant la sélection des notifications devant lui être envoyées en fonction de la validation d'un critère de test prédéterminé contenu dans le filtre.

En fonction du filtre défini par chaque objet récepteur, l'admnistrateur de serveur de notifications 16 commande la configuration du canal de notifications 18 pour la mise en oeuvre de filtres 28A, 28B propres, respectivement, aux objets récepteurs 14A et 14B. Le canal de notifications 18 connaît ainsi, pour chaque objet récepteur 14A, 14B, la référence de l'objet et le critère de test propre à cet objet.

Selon l'invention, le critère de test prédéterminé consiste en la comparaison de deux valeurs issues d'un même objet émetteur et représentative d'informations le concernant.

Par exemple, le filtrage s'effectue par la comparaison des niveaux des champs "severity" et "highestseverity" afin que seules les alarmes ayant le niveau le plus élevé de l'ensemble des alarmes présentes sur le réseau soient transmises aux objets récepteurs ayant imposé un tel filtrage.

A cet effet, la structure du filtre rédigée en IDL suivant la spécification CORBA est de la forme suivante :

```
 typedef string Attributeld ;
 struct AttributeValueType {
 Attributeld attributeld ;
 any attributeValue ;
   } ;
   struct TwoAttributesType {
 Attributeld attributeld1 ;
 Attributeld attributeld2 ;
   } ;
   enum TestType {AttributeWithValue, AttributeWithOtherAttribute} ;
   union AttributeType switch (TestType)
   {
     case AttributeWithValue : AttributeValueType single ;
      case AttributeWithOtherAttribute : TwoAttributesType multi ;
  } ;
  enum FilterltemType {
  equalityChoice,
  greaterOrEqualChoice,
  lessOrEqualChoice,
  } ;
  union Filterltem switch (FilterltemType) {
      case equalityChoice : AttributeType equality ;
      case greaterOrEqualChoice : AttributeType greaterOrEqual ;
      case lessOrEqualChoice : Attribute Type lessOrEqual ;
  } ;
```

dans lequel :
- "Attributeld" est l'indentificateur d'un attribut,
- "Filterltem" est un test de base qui, par association avec d'autres tests de base, grâce à des opérateurs logiques tels que ET, OU, NON, permet l'écriture de tests complexes.
"Filterltem" est déterminé par "FilterltemType" qui donne le type de test, dans le cas présent, parmi les tests suivants : égalité (equality), supérieur ou égal (greater-OrEqual), inférieur ou égal (lessOrEqual).

Les arguments pour le test sont stockés dans "AttributeType".

Selon l'invention, deux structures différentes sont envisagées pour les arguments du test. Il s'agit d'une part, de "AttributeValueType" qui correspond au test effectué par comparaison entre une valeur d'un champ de la structure de données et une valeur de référence prédéterminée, et d'autre part de "TwoAttributesType" qui correspond au test effectué par comparaison entre deux valeurs de champs de la même structure de données et relative à un même objet émetteur.

Pour la rédaction du filtre, ces deux structures différentes sont désignées plus explicitement, respectivement par :
"AttributeWithValue" et "AttributeWithOtherAttribute".

Avec une telle structure de filtre, le filtrage des notifications suivant le critère de test selon lequel le niveau de gravité de la panne de l'unité de traitement d'informations ("severity") est supérieur ou égal au niveau le plus élevé rencontré sur le réseau ("highestseverity") s'écrit sous la forme:
greaterOrEqual(AttributeType(AttributeWithOhterAttribute){severity, highestseverity})

On comprend qu'avec un tel système de filtrage, la possibilité de sélection des notifications devant être envoyées aux objets récepteurs est accrue. En particulier, les critères de filtrage peuvent évoluer en fonction du temps et de l'état du réseau.

Au contraire, avec les filtres actuels mettant en oeuvre uniquement une comparaison d'une valeur d'attribut à une valeur de référence, de telles évolutions des critères de filtrage sont impossibles.

Bien que la description qui est faite ici mette en oeuvre des objets émetteurs et récepteurs, ceux-ci peuvent être des composants logiciels conventionnels et notamment des programmes procéduraux classiques.

## Revendications

1. Procédé de transmission d'une notification dans un réseau de traitement d'informations à applications distribuées depuis un émetteur (10A, 10B, 10C, 10D, 10E) vers au moins un récepteur (14A, 14B) par l'intermédiaire d'un service de notifications (12) auprès duquel est inscrit le ou chaque récepteur (14A, 14B) afin d'effectuer un filtrage des notifications selon un critère de test prédéterminé, ledit réseau de traitement d'informations à applications distribuées comprenant des autres émetteurs (10A, 10B, 10C, 10D, 10E), l'émetteur étant associé à une unité de traitement d'informations et les autres émetteurs étant associés respectivement à d'autres unités de traitement d'informations, l'émetteur et les autres émetteurs étant adaptés à communiquer entre eux au moins une alarme traduisant une panne d'un niveau déterminé sur l'unité de traitement d'informations ou sur une des autres unités de traitement d'informations, le procédé étant **caractérisé en ce que** :
- l'émetteur (10A, 10B, 10C, 10D, 10E) adresse au service de notifications (12) une notification comportant un ensemble d'au moins deux valeurs, l'ensemble de valeurs comprenant une première valeur indiquant un niveau de gravité d'une panne rencontrée sur l'unité de traitement d'informations, l'ensemble de valeurs comprenant également une seconde valeur indiquant un niveau de gravité le plus élevé d'une panne d'un niveau déterminé rencontrée parmi l'unité de traitement d'informations ou les autres unités de traitement d'informations ;
- le service de notifications (12) vérifie, pour chaque récepteur (14A, 14B) inscrit, si ledit ensemble de valeurs satisfait audit critère de test prédéterminé associé audit récepteur (14A, 14B), ledit critère de test prédéterminé comportant une comparaison de la première valeur et de la seconde valeur pour déterminer si la première valeur indique un niveau de gravité d'une panne plus élevé que le niveau de gravité indiqué par la seconde valeur; et
- le service de notifications (12) adresse ladite notification concernant ledit émetteur (10A, 10B, 10C, 10D, 10E) audit récepteur (14A, 14B) si le critère de test prédéterminé est satisfait, ledit service de notifications (12) n'adressant pas ladite notification concernant ledit émetteur (10A, 10B, 10C, 10D, 10E) audit récepteur (14A, 14B) si le critère de test prédéterminé n'est pas satisfait.

2. Procédé selon la revendication 1, **caractérisé en ce que** ledit critère de test prédéterminé est défini par ledit récepteur (14A, 14B) lors de son inscription auprès du service de notifications (12).

3. Réseau de traitement d'informations à applications distribuées comportant au moins un émetteur (10A, 10B, 10C, 10D, 10E) et d'autres émetteurs (10A, 10B, 10C, 10D, 10E), l'émetteur étant associé à une unité de traitement d'informations et les autres émetteurs étant associés respectivement à d'autres unités de traitement d'informations, l'émetteur et les autres émetteurs étant adaptés à communiquer entre eux au moins une alarme traduisant une panne d'un niveau déterminé sur l'unité de traitement d'informations ou sur une des autres unités de traitement d'informations, ledit réseau comportant également au moins un récepteur (14A, 14B), et un service de notifications (12) auprès duquel est inscrit le ou chaque récepteur (14A, 14B) afin de d'effectuer un filtrage des notifications satisfaisant à un critère de test prédéterminé, dans lequel :
- l'émetteur (10A, 10B, 10C, 10D, 10E) comporte des moyens pour adresser au service de notifications (12) une notification comportant un ensemble d'au moins deux valeurs, l'ensemble de valeurs comprenant une première valeur indiquant un niveau de gravité d'une panne rencontrée sur l'unité de traitement d'informations, l'ensemble de valeurs comprenant également une seconde valeur indiquant un niveau de gravité le plus élevé d'une panne d'un niveau déterminé rencontrée parmi l'unité de traitement d'informations ou les autres unités de traitement d'informations ;
- le service de notifications (12) comporte des moyens pour vérifier, pour chaque récepteur (14A, 14B) inscrit, si ledit ensemble de valeurs satisfait audit critère de test prédéterminé associé audit récepteur (14A, 14B), ledit critère de test prédéterminé comportant une comparaison de la première valeur et de la seconde valeur pour déterminer si la première valeur indique un niveau de gravité d'une panne plus élevé que le niveau de gravité indiqué par la seconde valeur ; et
- le service de notifications (12) comporte des moyens pour adresser ladite notification concernant ledit émetteur (10A, 10B, 10C, 10D, 10E) audit récepteur (14A, 14B) si le critère de test prédéterminé est satisfait, ladite notification concernant ledit émetteur (10A, 10B, 10C, 10D, 10E) n'étant pas adressée audit récepteur (14A, 14B) si le critère de test prédéterminé n'est pas satisfait.

4. Réseau selon la revendication 3, **caractérisé en ce que** ledit récepteur (14A, 14B) comporte des moyens de définition dudit critère de test prédéterminé lors de son inscription auprès du service de notifications (12).

5. Réseau selon l'une quelconque des revendications 3 à 4, **caractérisé en ce que** l'émetteur ou les autres émetteurs (10A, 10B, 10C, 10D, 10E) ou l'un au moins des récepteurs (14A, 14B) sont des objets.

6. Unité de communication d'un réseau de traitement d'informations à applications distribuées, lequel réseau comporte un émetteur (10A, 10B, 10C, 10D, 10E) et des autres émetteurs (10A, 10B, 10D, 10E) et au moins un récepteur (14A, 14B), l'émetteur étant associé à une unité de traitement d'informations et les autres émetteurs étant associés respectivement à d'autres unités de traitement d'informations, l'émetteur et les autres émetteurs étant adaptés à communiquer entre eux au moins une alarme traduisant une panne d'un niveau déterminé sur l'unité de traitement d'informations ou sur une des autres unités de traitement d'informations, l'unité de communication comportant un service de notifications (12) auprès duquel est inscrit le ou chaque récepteur (14A, 14B) afin d'effectuer un filtrage des notifications satisfaisant à un critère de test prédéterminé, l'unité de communication étant **caractérisé en ce que** l'émetteur (10A, 10B, 10C, 10D, 10E) comporte des moyens pour adresser au service de notifications (12) une notification comportant un ensemble d'au moins deux valeurs, l'ensemble de valeurs comprenant une première valeur indiquant un niveau de gravité d'une panne rencontrée sur l'unité de traitement d'informations, l'ensemble de valeurs comprenant également une seconde valeur indiquant un niveau de gravité le plus élevé d'une panne d'un niveau déterminé rencontrée parmi l'unité de traitement d'informations ou les autres unités de traitement d'informations, le service de notifications (12) comportant des moyens pour vérifier, pour chaque récepteur (14A, 14B) inscrit, si ledit ensemble de valeurs satisfait audit critère de test prédéterminé associé audit récepteur (14A, 14B), ledit critère de test prédéterminé comportant une comparaison de la première valeur et de la seconde valeur pour déterminer si la première valeur indique un niveau de gravité d'une panne plus élevé que le niveau de gravité indiqué par la seconde valeur, et le service de notifications (12) comportant des moyens pour adresser ladite notification concernant ledit émetteur (10A, 10B, 10C, 10D, 10E) audit récepteur (14A, 14B) si le critère de test prédéterminé est satisfait, ladite notification concernant ledit émetteur (10A, 10B, 10C, 10D, 10E) n'étant pas adressée audit récepteur (14A, 14B) si le critère de test prédéterminé n'est pas satisfait.

## Patentansprüche

1. Verfahren zur Übertragung einer Mitteilung in einem Datenverarbeitungsnetz aus verteilten Anwendungen von einem Sender (10A, 10B, 10C, 10D, 10E) zu mindestens einem Empfänger (14A, 14B), vermittelt durch einen Mitteilungsdienst (12), bei dem der oder die Empfänger (14A, 14B) eingetragen sind, um eine Filterung der Mitteilungen nach einem vorgegebenen Testkriterium vorzunehmen, wobei besagtes Datenverarbeitungsnetz aus verteilten Anwendungen weitere Sender (10A, 10B, 10C, 10D, 10E) umfasst, wobei der Sender einer Datenverarbeitungseinheit zugeordnet ist und die weiteren Sender jeweiligen weiteren Datenverarbeitungseinheiten zugeordnet sind, wobei der Sender und die weiteren Sender dafür ausgelegt sind, um untereinander mindestens einen Alarm auszutauschen, der eine Störung eines bestimmten Grads in der Datenverarbeitungseinheit oder einer der weiteren Datenverarbeitungseinheiten anzeigt, wobei das Verfahren **dadurch gekennzeichnet ist, dass**:
- der Sender (10A, 10B, 10C, 10D, 10E) an den Mitteilungsdienst (12) eine Mitteilung richtet, die sich aus einer Gruppe von Werten mit mindestens zwei Werten zusammensetzt, wobei die Gruppe von Werten einen ersten Wert umfasst, welcher einen Schweregrad einer Störung angibt, die in einer Datenverarbeitungseinheit festgestellt wurde, wobei die Gruppe von Werten weiterhin einen zweiten Wert umfasst, welcher einen höchstmöglichen Schweregrad zu einer Störung von einem bestimmten Schweregrad angibt, welche in der Datenverarbeitungseinheit oder den weiteren Datenverarbeitungseinheiten festgestellt wurde;
- der Mitteilungsdienst (12) für jeden eingetragenen Empfänger (14A, 14B) verifiziert, ob besagte Gruppe von Werten besagtes vorgegebenes, besagtem Empfänger (14A, 14B) zugeordnetes Testkriterium erfüllt, wobei besagtes vorgegebenes Testkriterium einen Vergleich des ersten Werts und des zweiten Werts umfasst, um zu bestimmen, ob der erste Wert einen Schweregrad der Störung anzeigt, der höher ist als der vom zweiten Wert angezeigte Schweregrad; und
- der Mitteilungsdienst (12) besagte, besagten Sender (10A, 10B, 10C, 10D, 10E) betreffende Mitteilung an besagten Empfänger (14A, 14B) richtet, wenn das vorgegebene Testkriterium erfüllt ist, wobei besagter Mitteilungsdienst (12) besagte, besagten Sender (10A, 10B, 10C, 10D, 10E) betreffende Mitteilung nicht an besagten Empfänger (14A, 14B) richtet, wenn das vorgegebene Testkriterium nicht erfüllt wird.

2. Verfahren nach Anspruch 1, **dadurch gekennzeichnet, dass** besagtes vorgegebenes Testkriterium von besagtem Empfänger (14A, 14B) im Zuge seines Eintrags bei dem Mitteilungsdienst (12) definiert wird.

3. Datenverarbeitungsnetz aus verteilten Anwendungen, mindestens einen Sender (10A, 10B, 10C, 10D, 10E) und weitere Sender (10A, 10B, 10C, 10D, 10E) umfassend, wobei der Sender einer Datenverarbeitungseinheit und die weiteren Sender entsprechenden weiteren Datenverarbeitungseinheiten zugeordnet sind, wobei der Sender und die weiteren Sender dafür ausgelegt sind, um untereinander mindestens einen Alarm auszutauschen, der eine Störung eines bestimmten Schweregrads in der Datenverarbeitungseinheit oder in den weiteren Datenverarbeitungseinheiten anzeigt, wobei besagtes Netz weiterhin mindestens einen Empfänger (14A, 14B) sowie einen Mitteilungsdienst (12) umfasst, bei dem der oder jeder der Empfänger (14A, 14B) eingetragen ist, um eine Filterung der Mitteilungen gemäß einem vorgegebenen Testkriterium auszuführen, wobei:
- der Sender (10A, 10B, 10C, 10D, 10E) Mittel umfasst, um an den Mitteilungsdienst (12) eine Mitteilung zu richten, die sich aus einer Gruppe von Werten mit mindestens zwei Werten zusammensetzt, wobei die Gruppe von Werten einen ersten Wert umfasst, welcher einen Schweregrad einer Störung angibt, die in einer Datenverarbeitungseinheit festgestellt wurde, wobei die Gruppe von Werten weiterhin einen zweiten Wert umfasst, welcher einen höchstmöglichen Schweregrad zu einer Störung von einem bestimmten Schweregrad angibt, welche in der Datenverarbeitungseinheit oder den weiteren Datenverarbeitungseinheiten festgestellt wurde;
- der Mitteilungsdienst (12) Mittel umfasst, um für jeden eingetragenen Empfänger (14A, 14B) zu verifizieren, ob besagte Gruppe von Werten besagtes vorgegebenes, besagtem Empfänger (14A, 14B) zugeordnetes Testkriterium erfüllt, wobei besagtes vorgegebenes Testkriterium einen Vergleich des ersten Werts und des zweiten Werts umfasst, um zu bestimmen, ob der erste Wert einen Schweregrad der Störung anzeigt, der höher ist als der vom zweiten Wert angezeigte Schweregrad; und
- der Mitteilungsdienst (12) Mittel umfasst, um besagte, besagten Sender (10A, 10B, 10C, 10D, 10E) betreffende Mitteilung an besagten Empfänger (14A, 14B) zu richten, wenn das vorgegebene Testkriterium erfüllt ist, wobei besagte, besagten Sender (10A, 10B, 10C, 10D, 10E) betreffende Mitteilung nicht an besagten Empfänger (14A, 14B) gerichtet wird, wenn das vorgegebene Testkriterium nicht erfüllt wird.

4. Netz nach Anspruch 3, **dadurch gekennzeichnet, dass** besagter Empfänger (14A, 14B) Mittel für das Definieren besagten vorgegebenen Testkriteriums im Zuge seines Eintrags bei dem Mitteilungsdienst (12) umfasst.

5. Netz nach einem jeglichen der Ansprüche 3 bis 4, **dadurch gekennzeichnet, dass** der Sender oder die weiteren Sender (10A, 10B, 10C, 10D, 10E) oder der mindestens eine der Empfänger (14A, 14B) Gegenstände sind.

6. Kommunikationseinheit eines Datenverarbeitungsnetzes aus verteilten Anwendungen, wobei besagtes Netz einen Sender (10A, 10B, 10C, 10D, 10E) und weitere Sender (10A, 10B, 10C, 10D, 10E) sowie mindestens einen Empfänger (14A, 14B) umfasst, wobei der Sender einer Datenverarbeitungseinheit und die weiteren Sender weiteren Datenverarbeitungseinheiten zugeordnet sind, wobei der Sender und die weiteren Sender dafür ausgelegt sind, um untereinander mindestens einen Alarm auszutauschen, der eine Störung eines bestimmten Schweregrads in der Datenverarbeitungseinheit oder in den weiteren Datenverarbeitungseinheiten anzeigt, wobei die Kommunikationseinheit einen Mitteilungsdienst (12) umfasst, bei dem der oder jeder der Empfänger (14A, 14B) eingetragen ist, um eine Filterung der Mitteilungen gemäß einem vorgegebenen Testkriterium auszuführen, wobei die Kommunikationseinheit **dadurch gekennzeichnet ist, dass** der Sender (10A, 108, 10C, 10D, 10E) Mittel umfasst, um an den Mitteilungsdienst (12) eine Mitteilung zu richten, die sich aus einer Gruppe von Werten mit mindestens zwei Werten zusammensetzt, wobei die Gruppe von Werten einen ersten Wert umfasst, welcher einen Schweregrad einer Störung angibt, die in einer Datenverarbeitungseinheit festgestellt wurde, wobei die Gruppe von Werten weiterhin einen zweiten Wert umfasst, welcher einen höchstmöglichen Schweregrad zu einer Störung von einem bestimmten Schweregrad angibt, welche in der Datenverarbeitungseinheit oder den weiteren Datenverarbeitungseinheiten festgestellt wurde, wobei der Mitteilungsdienst (12) Mittel umfasst, um für jeden eingetragenen Empfänger (14A, 14B) zu verifizieren, ob besagte Gruppe von Werten besagtes vorgegebenes, besagtem Empfänger (14A, 14B) zugeordnetes Testkriterium erfüllt, wobei besagtes vorgegebenes Testkriterium einen Vergleich des ersten Werts und des zweiten Werts umfasst, um zu bestimmen, ob der erste Wert einen Schweregrad der Störung anzeigt, der höher ist als der vom zweiten Wert angezeigte Schweregrad, und wobei der Mitteilungsdienst (12) Mittel umfasst, um besagte, besagten Sender (10A, 10B, 10C, 10D, 10E) betreffende Mitteilung an besagten Empfänger (14A, 14B) zu richten, wenn das vorgegebene Testkriterium erfüllt ist, wobei besagte, besagten Sender (10A, 10B, 10C, 10D, 10E) betreffende Mitteilung nicht an besagten Empfänger (14A, 14B) gerichtet wird, wenn das vorgegebene Testkriterium nicht erfüllt wird.

## Claims

1. Method for notification transmission in a distributed applications data processing network from an emitter (10A, 10B, 10C, 10D, 10E) to at least one receiver (14A, 14B) via a notification service (12) with which the or each receiver (14A, 14B) is registered, in order to filter the notifications according to a predetermined test criterion, said distributed applications data processing network including other emitters (10A, 10B, 10C, 10D, 10E), the emitter being associated with a data processing unit and the other emitters being respectively associated with other data processing units, the emitter and the other emitters being designed to send each other at least one alarm representing a failure of a determined level on the data processing unit or on one of the other data processing units, the method being **characterised in that**:
- the emitter (10A, 10B, 10C, 10D, 10E) sends a notification to the notification service (12), said notification comprising a set of at least two values, the set of values including a first value showing a severity level of a failure encountered on the data processing unit, the set of values further including a second value showing the highest severity level of a failure of a determined level encountered by the data processing unit or the other data processing units;
- the notification service (12) checks, for each registered receiver (14A, 14B), whether said set of values meets said predetermined test criterion associated with said receiver (14A, 14B), said predetermined test criterion comprising a comparison between the first value and the second value to determine whether the first value represents a severity level of a failure that is higher than the severity level shown by the second value; and
- the notification service (12) sends said notification concerning said emitter (10A, 10B, 10C, 10D, 10E) to said receiver (14A, 14B) if the predetermined test criterion is met, said notification service (12) not sending said notification concerning said emitter (10A, 10B, 10C, 10D, 10E) to said receiver (14A, 14B) if the predetermined test criterion is not met.

2. Method according to claim 1, **characterised in that** said predetermined test criterion is defined by said receiver (14A, 14B) during its registration with the notification service (12).

3. Distributed applications data processing network comprising at least one emitter (10A, 10B, 10C, 10D, 10E) and other emitters (10A, 10B, 10C, 10D, 10E), the emitter being associated with a data processing unit and the other emitters being respectively associated with other data processing units, the emitter and the other emitters being designed to send each other at least one alarm representing a failure of a determined level on the data processing unit or on one of the other data processing units, said network further comprising at least one receiver (14A, 14B), and a notification service (12) with which the or each receiver (14A, 14B) is registered, in order to filter the notifications meeting a predetermined test criterion, wherein:
- the emitter (10A, 10B, 10C, 10D, 10E) comprises means for sending a notification to the notification service (12), said notification comprising a set of at least two values, the set of values including a first value showing a severity level of a failure encountered on the data processing unit, the set of values further including a second value showing the highest severity level of a failure of a determined level encountered by the data processing unit or the other data processing units;
- the notification service (12) comprises means for checking, for each registered receiver (14A, 14B), whether said set of values meets said predetermined test criterion associated with said receiver (14A, 14B), said predetermined test criterion comprising a comparison between the first value and the second value to determine whether the first value represents a severity level of a failure that is higher than the severity level shown by the second value; and
- the notification service (12) comprises means for sending said notification concerning said emitter (10A, 10B, 10C, 10D, 10E) to said receiver (14A, 14B) if the predetermined test criterion is met, said notification concerning said emitter (10A, 10B, 10C, 10D, 10E) not being sent to said receiver (14A, 14B) if the predetermined test criterion is not met.

4. Network according to claim 3, **characterised in that** said receiver (14A, 14B) comprises means for defining said predetermined test criterion during its registration with the notification service (12).

5. Network according to any one of claims 3 to 4,
**characterised in that** the emitter or the other emitters (10A, 10B, 10C, 10D, 10E) or at least one of the receivers (14A, 14B) are objects.

6. Communication unit of a distributed applications data processing network, wherein said network comprises an emitter (10A, 10B, 10C, 10D, 10E) and other emitters (10A, 10B, 10D, 10E) and at least one receiver (14A, 14B), the emitter being associated with a data processing unit and the other emitters being respectively associated with other data processing units, the emitter and the other emitters being designed to send each other at least one alarm representing a failure of a determined level on the data processing unit or on one of the other data processing units, the communication unit comprising a notification service (12) with which the or each receiver (14A, 14B) is registered, in order to filter the notifications meeting a predetermined test criterion, the communication unit being **characterised in that** the emitter (10A, 10B, 10C, 10D, 10E) comprises means for sending a notification to the notification service (12), said notification comprising a set of at least two values, the set of values including a first value showing a severity level of a failure encountered on the data processing unit, the set of values further including a second value showing the highest severity level of a failure of a determined level encountered by the data processing unit or the other data processing units, the notification service (12) comprising means to check, for each registered receiver (14A, 14B), whether said set of values meets said predetermined test criterion associated with said receiver (14A, 14B), said predetermined test criterion comprising a comparison between the first value and the second value to determine whether the first value represents a severity level of a failure that is higher than the severity level shown by the second value, and the notification service (12) comprising means for sending said notification concerning said emitter (10A, 10B, 10C, 10D, 10E) to said receiver (14A, 14B) if the predetermined test criterion is met, said notification concerning said emitter (10A, 10B, 10C, 10D, 10E) not being sent to said receiver (14A, 14B) if the predetermined test criterion is not met.
